**Europäisches Patentamt**

**European Patent Office**

**Office européen des brevets**

(19)

(11) Veröffentlichungsnummer : **0 363 678 B1**

# EUROPÄISCHE PATENTSCHRIFT

(12)

(45) Veröffentlichungstag der Patentschrift :
**29.07.92 Patentblatt 92/31**

(51) Int. Cl.$^5$ : **C09K 5/00**

(21) Anmeldenummer : **89117167.0**

(22) Anmeldetag : **16.09.89**

(54) **Wärmeträgerflüssigkeit.**

(30) Priorität : **12.10.88 DE 3834772**
**01.08.89 DE 3925482**

(43) Veröffentlichungstag der Anmeldung :
**18.04.90 Patentblatt 90/16**

(45) Bekanntmachung des Hinweises auf die
Patenterteilung :
**29.07.92 Patentblatt 92/31**

(84) Benannte Vertragsstaaten :
**AT BE CH DE ES FR GB IT LI NL SE**

(56) Entgegenhaltungen :
**FR-A- 1 290 267**
**US-A- 2 692 234**
**CHEMICAL ABSTRACTS, vol. 82, 1975, page
227, abstract no. 61140k, Columbus, Ohio, US;
& SU-A-432 168 (V.S. SHKARUPA)15-06-1974**

(73) Patentinhaber : **METZELER Automotive
Profiles GmbH
Bregenzer Strasse 133
W-8990 Lindau / Bodensee (DE)**

(72) Erfinder : **Michel, Werner, Dr.
Hans-Bierling-Strasse 13
W-8039 Emmering (DE)**

(74) Vertreter : **Michelis, Theodor, Dipl.-Ing.
Seibert + Michelis Rechtsanwälte und
Patentanwälte Tattenbachstrasse 9
W-8000 München 22 (DE)**

EP 0 363 678 B1

## Beschreibung

Die Erfindung bezieht sich auf eine Wärmeträgerflüssigkeit, bestehend aus geschmolzenem Kaliumnitrat.

Produkte, die als Wärmeträgerflüssigkeit, beispielsweise bei der Vulkanisation von Gummi, Verwendung finden, müssen eine Reihe spezieller Eigenschaften erfüllen, wie z.B.:

a) chemische Beständigkeit im gewählten Druck- und Temperaturbereich

b) günstige Stoffwerte (niedrige Viskosität, hohe Wärmeleitfähigkeit und spezifische Wärme)

c) niedrigen Dampfdruck

d) niedrige Stock- und Erstarrungstermperatur

e) nicht giftig oder ätzend

f) nicht korrodierend

g) leicht zu vernichten, wenn unbrauchbar.

Eine bekannte Wärmeträgerflüssigkeit aus einem handelsüblichen Salzgemisch besteht aus einem ternären Gemisch von 53 Gew.-% Kaliumnitrat, 40 Gew.-% Natriumnitrit und 7 Gew.-% Natriumnitrat und weist einen Schmelzpunkt von 142°C auf. Das darin enthaltene Natriumnitrit bedingt jedoch eine Reihe von Nachteilen. Der Kontakt des geschmolzenen Salzgemisches mit sauren Agenzien, beispielsweise Carbonsäuren aus organischem Material, führt zur Bildung von toxischen Stickoxyden, die besondere Schutzmaßnahmen erfordern. Beim Zusammentreffen organischer Substanzen mit Natriumnitrit kann es ferner zu Verpuffungen und Explosionen kommen. Darüber hinaus erfolgt bei erhöhter Temperatur eine Reaktion des Nitrits mit Luftsauerstoff zu Nitrat, was sich in einer veränderten Zusammensetzung der Salzschmelze, verbunden mit einem Anstieg der Schmelztemperatur, äußert und letztlich die Unbrauchbarkeit der Schmelze zur Folge hat. Schließlich gestaltet sich aufgrund der beträchtlichen Toxizität die Vernichtung verbrauchter, nitrithaltiger Schmelzen problematisch und verlangt die Verbringung auf Sonderdeponien.

Aus der DE-PS 30 38 844 ist ein ternäres Salzgemisch aus 44 Gew.-% Calziumnitrat, 44 Gew.-% Kaliumnitrat und 12 Gew.-% Natriumnitrat bekannt, das einen relativ hohen Schmelzpunkt von 144°C und eine hohe Viskosität aufweist, die das Abtropfen der Schmelze von beispielsweise zu vulkanisierenden Gummiprofilen stark erschwert.

Aus der GB-PS 992 418 ist ferner ein ternäres Salzgemisch aus 57,6 Gew.-% Kaliumnitrat, 16,2 Gew.-% Natriumnitrat und 26,2 Gew.-% Lithiumnitrat bekannt, das einen Schmelzpunkt von 127°C aufweisen soll. Auch hierbei bewirkt der Zusatz des Natriumnitrats eine erhöhte Viskosität der Schmelzen, die bei bestimmten Prozessen nachteilig sein kann.

Der vorliegenden Erfindung liegt daher die Aufgabe zugrunde, eine Wärmeträgerflüssigkeit zu finden, die sich durch einen niedrigen Schmelzpunkt und insbesondere eine geringe Viskosität, verbunden mit einer geringen Toxizität und einer dadurch bedingten gefahrlosen Handhabung auszeichnet.

Zur Lösung dieser Aufgabe weist erfindungsgemäß das geschmolzene Kaliumnitrat einen Gehalt an Lithiumnitrat auf.

Ein derartiges binäres Gemisch hat im interessierenden Temperaturbereich der Schmelze eine Viskosität von etwa 25 m Pa x s gegenüber etwa 40 m Pa x s bekannter Gemische nach der GB-PS. Damit ist diese Schmelze sehr viel dünnflüssiger und tropft beispielsweise bei der Vulkanisation endloser Gummistränge sehr viel besser ab, so daß weniger Salz ausgetragen, abgewaschen und wiederaufbereitet werden muß. Ferner sind Pumpen geringerer Leistung für die Umwälzung der Schmelze möglich.

Gegebenenfalls kann ein Zusatz von Calziumnitrat zweckmäßig sein, um den Schmelzpunkt noch weiter abzusenken.

Zweckmäßigerweise werden dabei wasserfreie Salze verwendet, wobei eine handelsübliche Qualität in technischer Reinheit für den vorgesehenen Verwendungszweck ausreichend ist.

Abweichend davon können aber auch Salze in solvatisierter Form, z.B. als Hydrat, zur Anwendung kommen, wenn sichergestellt ist, daß beim Aufschmelzen das als Schaum entstehende Wasser sicher verdampfen kann.

Vorzugsweise beträgt bei einem Salzgemisch aus Kaliumnitrat und Lithiumnitrat der Gehalt an Kaliumnitrat 55 - 80 Gew.-%, insbesondere 63 - 73 Gew.-%, und an Lithiumnitrat 20 - 45 Gew.-%, insbesondere 27 - 37 Gew.-%.

Der gegebenenfalls vorgesehene Gehalt von Calziumnitrat kann 0 - 48 Gew.-% betragen.

Bei einem ternären Gemisch mit Calziumnitrat sollte der Gehalt an Lithiumnitrat mindestens 7 Gew.-% und an Kaliumnitrat mindestens 46 Gew.-% betragen.

Damit sind jeweils Schmelzen mit einem Schmelzpunkt von unter 150°C möglich.

Als besonders zweckmäßig hat sich ein ternäres Gemisch aus 60 Gew.-% Kaliumnitrat, 22 Gew.-% Lithiumnitrat und 18 Gew.-% Calziumnitrat erwiesen, das einen Schmelzpunkt von nur 112°C bei ausreichend niedriger Viskosität aufweist.

Die Herstellung der erfindungsgemäßen Wärmeträgerflüssigkeiten gestaltet sich sehr einfach. Die Vermischung der Einzelbestandteile erfolgt in der Regel durch deren Vermengen in trockener Form zu einer Vormischung, gefolgt vom Aufschmelzen zu einer homogenen Phase. Es ist jedoch auch möglich und gegebenenfalls verfahrenstechnisch angebracht, die einzelnen Bestandteile ohne vorheriges Vermengen portionsweise einer bereits flüssigen Schmelze zuzusetzen, in der dann die Auflösung erfolgt.

Neben ihrer allgemeinen Verwendung in Heizbädern oder als Wärmeübertragungsmittel werden die erfindungsgemäßen Wärmeträgerflüssigkeiten insbesondere bei der Vulkanisation von Gummi eingesetzt, wobei Endlosstränge von Gummiprofilen durch die üblicherweise auf 180° bis 260° erhitzte Salzschmelze geführt und dabei vulkanisiert werden.

Die erfindungsgemäßen Wärmeträgerflüssigkeiten zeichnen sich hierbei insbesondere durch ihre hohe Stabilität, ausgedrückt in einer langen Verwendungsdauer, ihre vergleichsweise geringe Toxizität und die sichere Handhabung aus, verbunden mit der unproblematischen Vernichtung bzw. Wiederaufbereitung etwaiger Reste. Wesentlich dabei ist auch der geringe Dampfdruck der Schmelze, so daß bei Temperaturen im Arbeitsbereich, also unterhalb 250°C, ein Verdampfen praktisch nicht auftritt.

Bedingt durch die niedrigen Schmelzpunkte dieser Wärmeträgerflüssigkeiten ist eine Senkung der Investitions- und Betriebskosten, da zur Erhalt des flüssigen Zustandes ein geringerer Isolationsaufwand bzw. ein geringerer Bedarf an Heizenergie erforderlich ist. Insbesondere gestaltet es sich einfacher, den Wärmeträger auch bei Stillstandszeiten flüssig zu halten, da erstarrte Massen infolge der gestörten Konvektion nur mit großem Zeitaufwand wieder erschmolzen werden können. Darüber hinaus führt das Erstarren und Wiederaufschmelzen infolge der dadurch verbundenen Volumenänderungen zu Schub- und Druckspannungen in den Behälterwänden, die dadurch einer erhöhten Bruchgefahr ausgesetzt sind. Auch in diesem Belang zeigen die erfindungsgemäßen Wärmeträgerflüssigkeiten somit Vorteile.

Nachfolgend werden einige Beispiele für besonders vorteilhafte Salzgemische erläutert.

Beispiel 1:

In einem Trommelmischer werden siebenmal je 27 kg Lithiumnitrat und 73 kg Kaliumnitrat trocken vermischt und in eine elektrisch beheizte Wanne eingetragen, wo sie zu einer klaren Schmelze aufschmelzen.

In dieser Schmelze werden über mehrere Monate hinweg Gummiprofile bei einer Temperatur von 200 - 250° vulkanisiert. Nach dem Austreten des endlosen Gummistranges aus der Schmelze werden anhaftende Salzreste mit Wasser abgewaschen. Die Waschlösungen werden durch Verdampfen des Wassers bis zum Erreichen einer Salzschmelze aufkonzentriert und diese in die Heizwanne zurückgepumpt. Beim Abkühlen des Bades scheiden sich ab 165° Kristalle vom Kaliumnitrat ab, bei 145° erstarrt die Schmelze.

Beispiel 2:

Wie in Beispiel 1 beschrieben, werden 32 Gew.-% Lithiumnitrat und 68 Gew.-% Kaliumnitrat miteinander vermischt und aufgeschmolzen. Beim Abkühlen der Schmelze scheiden sich ab 140° Kristalle aus, bei 133° erfolgt die Erstarrung. Diese Schmelze zeichnet sich durch eine um etwa 20 % längere Standzeit in den zur Vulkanisation des Gummis verwendeten Bädern aus.

Beispiel 3:

15 Gew.-% Lithiumnitrat, 27 Gew.-% Calziumnitrat und 58 Gew.-% Kaliumnitrat werden vermischt und aufgeschmolzen. Beim Abkühlen auf 110° bildet sich eine unterkühlte hochviskose Schmelze, die nach einiger Zeit kristallisiert. Der Schmelzpunkt des Gemisches liegt bei 123 - 125°.

Beispiel 4:

Eine Schmelze aus 22 Gew.-% Lithiumnitrat, 60 Gew.-% Kaliumnitrat und 18 Gew.-% Calziumnitrat stellt nach dem Abkühlen bis auf 100° noch eine klare, viskose Flüssigkeit dar. Diese unterkühlte Schmelze kristallisiert nach einiger Zeit mit einer gleichbleibenden Temperatur von 107°. Beim Erwärmen auf 112° schmilzt die feinkristalline Masse wieder klar auf.

Besonders das letzte Gemisch kann mit einem relativ geringen Energieaufwand während Produktionspausen, z.B. über das Wochenende, flüssig gehalten und dann bei Wiederaufnahme der Produktion auf die erforderliche Temperatur für die Vulkanisation aufgeheizt werden, ohne daß dabei irgendwelche Probleme auftauchen.

Insgesamt ergeben sich binäre und ternäre Systeme, deren Schmelzpunkte sehr viel niedriger als die der singulären Salze mit einem Schmelzpunkt von 337°C für Kaliumnitrat, 251°C für Lithiumnitrat und 561°C für Calziumnitrat liegen. Die darüber hinaus vorhandene niedrige Viskosität der Schmelzen erleichtert das Abtropfen vom vulkanisierten Gummi und führt somit zu einer Erhöhung der Produktionsgeschwindigkeit wegen des besseren Wärmeübergangs und vermindert den Bedarf an Waschwasser.

## Patentansprüche

1. Wärmeträgerflüssigkeit, bestehend aus geschmolzenem Kaliumnitrat mit einem Gehalt von 55-80 Gew.-% und aus Lithiumnitrat mit einem Gehalt von 20-45 Gew.-% sowie gegebenenfalls Calziumnitrat mit einem Gehalt von 0-48 Gew.-%.

2. Wärmeträgersalz nach Anspruch 1, gekennzeichnet durch die Verwendung von wasserfreien Salzen.

3. Wärmeträgerflüssigkeit nach Anspruch 1, dadurch gekennzeichnet, daß der Gehalt an Kaliumnitrat 63-73 Gew.-% beträgt.

4. Wärmeträgersalz nach Anspruch 1, dadurch gekennzeichnet, daß der Gehalt an Lithiumnitrat 27-37 Gew.-% beträgt.

5. Wärmeträgerflüssigkeit nach Anspruch 2, dadurch gekennzeichnet, daß der Gehalt an Kaliumnitrat mindestens 40 Gew.-% beträgt.

6. Wärmeträgerflüssigkeit nach einem oder mehreren der Ansprüche 2 - 6, gekennzeichnet durch ein ternäres Gemisch aus 60 Gew.-% Kaliumnitrat, 22 Gew.-% Lithiumnitrat und 18 Gew.-% Calziumnitrat.

7. Verwendung der Wärmeträgerflüssigkeit nach einem oder mehreren der Ansprüche 1 - 9 bei der Vulkanisation von Gummi.

8. Verfahren zur Vulkanisation von Profilsträngen aus Gummi nach Anspruch 10, bei dem die Gummiprofile kontinuierlich durch eine Salzschmelze geführt und dabei vulkanisiert werden, gekennzeichnet durch folgende Verfahrensschritte:

a) Führen der Profilstränge durch eine Salzschmelze aus Kaliumnitrat mit einem Gehalt an Lithiumnitrat und einer Viskosität von etwa 25 mPa x s;

b) Aufheizen der Salzschmelze auf eine Temperatur zwischen 180° und 260°C.

9. Verfahren nach Anspruch 11, dadurch gekennzeichnet, daß die Profilstränge durch eine Salzschmelze mit einem Schmelzpunkt von unter 150°C geführt werden.

10. Verfahren nach Anspruch 11 oder 12, dadurch gekennzeichnet, daß die Profilstränge durch eine Salzschmelze mit einer Viskosität von etwa 25 mPa x s geführt werden.

11. Verfahren nach Anspruch 11, dadurch gekennzeichnet, daß die Profilstränge durch eine Salzschmelze geführt werden, deren Gehalt an Kaliumnitrat 55 - 80 Gew.-%, insbesondere 63 - 73 Gew.-% beträgt.

12. Verfahren nach Anspruch 11, dadurch gekennzeichnet, daß die Profilstränge durch eine Salzschmelze geführt werden, deren Gehalt an Lithiumnitrat 20 - 45 Gew.-%, insbesondere 27 - 37 Gew.-% beträgt.

13. Verfahren nach Anspruch 11, dadurch gekennzeichnet, daß die Profilstränge durch eine Salzschmelze geführt werden, die einen zusätzlichen Gehalt an Calziumnitrat aufweist.

14. Verfahren nach Anspruch 16, dadurch gekennzeichnet, daß der Gehalt an Calziumnitrat 0 - 48 Gew.-% beträgt.

15. Verfahren nach Anspruch 11 und 16, dadurch gekennzeichnet, daß die Profilstränge durch eine Salzschmelze geführt werden, die aus 60 Gew.-% Kaliumnitrat, 22 Gew.-% Lithiumnitrat und 18 Gew.-% Calziumnitrat besteht.

16. Verfahren nach Anspruch 18, gekennzeichnet durch die zusätzlichen Schritte:

c) Abkühlen der Salzschmelze auf 100°C, um eine klare, viskose Flüssigkeit zu erhalten;

d) Kristallisieren der gekühlten Schmelze bei einer konstanten Temperatur von 107°C;

e) Aufheizen auf 112°C, um die feinkristalline Masse erneut zu einer klaren Schmelze aufzuschmelzen und für weitere Vulkanisationen zu verwenden.

17. Verfahren nach Anspruch 11, gekennzeichnet durch die folgenden zusätzlichen Eingangsschritte:

f) Mischen der Einzelkomponenten des Salzes in trockener Form, um eine Vormischung zu erhalten;

g) Aufschmelzen dieser Vormischung zu einer homogenen Phase.

18. Verfahren nach Anspruch 11, gekennzeichnet durch die folgenden, zusätzlichen Eingangsschritte:

h) Hinzufügen der einzelnen Komponenten zu einer bereits flüssigen Schmelze, in der sie sich auflösen.

## Claims

1. A thermal liquid comprising molten potassium nitrate in a content of 55 - 80 % by weight and lithium nitrate in a content of 20 - 45 % by weight and optionally calcium nitrate in a content of 0 - 48 % by weight.

2. A thermal salt as claimed in Claim 1, characterised by the use of moisture-free salts.

3. A thermal liquid as claimed in Claim 1, characterised in that the potassium nitrate content amounts to 63 - 73 % by weight.

4. A thermal salt as claimed in Claim 1, characterised in that the lithium nitrate content amounts to 27 - 37 % by weight.

5. A thermal liquid as claimed in Claim 2, characterised in that the potassium nitrate content amounts to at least 40 % by weight.

6. A thermal liquid as claimed in one or more of Claims 2 - 6, characterised by a ternary mixture comprising 60 % by weight potassium nitrate, 22 % by weight lithium nitrate and 18 % by weight calcium nitrate.

7. The use of the thermal liquid as claimed in one or more of Claims 1 - 6 in the vulcanisation of rubber.

8. A process for the vulcanisation of profiled strands of rubber as claimed in Claim 7, wherein the rubber profiles are conducted continuously through a salt melt and are thereby vulcanised, characterised by the following process steps:

a) the profiled strands are conducted through a salt melt which is composed of potassium nitrate and contains lithium nitrate and which possesses a viscosity of approximately 25 mPa x s;

b) the salt melt is heated to a temperature of between 180° and 260°C.

9. A process as claimed in Claim 8, characterised in that the profiled strands are conducted through a salt melt with a melting point of less than 150°C.

10. A process as claimed in Claim 8 or 9, characterised in that the profiled strands are conducted through a salt melt with a viscosity of approximately 25 mPa x s.

11. A process as claimed in Claim 8, characterised in that the profiled strands are conducted through a salt melt, the potassium nitrate content of which amounts to 55 - 80 % by weight, in particular 63 - 73 % by weight.

12. A process as claimed in Claim 8, characterised in that the profiled strands are conducted through a salt melt, the lithium nitrate content of which amounts to 20 - 45 % by weight, in particular 27 - 37 % by weight.

13. A process as claimed in Claim 8, characterised in that the profiled strands are conducted through a salt melt which additionally contains calcium nitrate.

14. A process as claimed in Claim 13, characterised in that the calcium nitrate content amounts to 0 - 48 % by weight.

15. A process as claimed in Claim 8 and 13, characterised in that the profiled strands are conducted through a salt melt comprising 60 % by weight potassium nitrate, 22 % by weight lithium nitrate and 18 % by weight calcium nitrate.

16. A process as claimed in Claim 15, characterised by the following additional steps:

c) cooling of the salt melt to 100°C in order to obtain a clear, viscous liquid;

d) crystallisation of the cooled melt at a constant temperature of 107°C;

e) heating to 112°C, whereby the fine-crystalline mass dissolves again to form a clear melt and can be used for further vulcanisation.

17. A process as claimed in Claim 8, characterised by the following additional initial steps:

f) mixing of the individual constituents of the salt in the dry state in order to obtain a premix;

g) melting of this premix to form a homogeneous phase.

18. A process as claimed in Claim 8, characterised by the following, additional initial steps:

h) addition of the individual constituents to an already liquid melt in which they dissolve.

## Revendications

1. Liquide caloporteur constitué de nitrate de potassium fondu, en une teneur de 55 à 80 % en poids et de nitrate de lithium en une teneur de 20 à 45 % en poids, ainsi que, le cas échéant, de nitrate de calcium en une teneur de 0 à 48 % en poids.

2. Sel caloporteur suivant la revendication 1, caractérisé par l'utilisation de sels anhydre.

3. Liquide caloporteur suivant la revendication 1, caractérisé en ce que la teneur en nitrate de potassium est comprise entre 63 et 73 % en poids.

4. Sel caloporteur suivant la revendication 1, caractérisé en ce que la teneur en nitrate de lithium est comprise entre 27 et 37 % en poids.

5. Liquide caloporteur suivant la revendication 2, caractérisé en ce que la teneur en nitrate de potassium est d'au moins 40 % en poids.

6. Liquide caloporteur suivant l'une ou plusieurs des revendications 2 à 6, caractérisé par un mélange ternaire de 60 % en poids de nitrate de potassium, de 22 % en poids de nitrate de lithium et de 18 % en poids de nitrate de calcium.

7. Utilisation du liquide caloporteur suivant l'une ou plusieurs des revendications 1 à 6, pour la vulcanisation du caoutchouc.

8. Procédé de vulcanisation de cordons profilés en caoutchouc suivant la revendication 7, qui consiste à faire passer des profilés en caoutchouc en continu dans un sel fondu et ainsi à les vulcaniser, caractérisé par les stades de procédés suivants :

a) passage des cordons profilés dans un sel fondu constitué de nitrate de potassium ayant une certaine teneur en nitrate de lithium et d'une viscosité de 25 mPa x s environ ;

b) chauffage du sel fondu à une température comprise entre 180° et 260°C.

9. Procédé suivant la revendication 8, caractérisé en ce qu'il consiste à faire passer les cordons profilés dans un sel fondu ayant un point de fusion inférieur à 150°C.

10. Procédé suivant la revendication 8 ou 9, caractérisé en ce qu'il consiste à faire passer les cordons profilés dans un sel fondu d'une viscosité de 25 mPa x s environ.

11. Procédé suivant la revendication 8, caractérisé en ce qu'il consiste à faire passer les cordons profilés dans un sel fondu dont la teneur en nitrate de potassium est de 55 à 80 % en poids et notamment de 63 à 73 % en poids.

12. Procédé suivant la revendication 8, caractérisé en ce qu'il consiste à faire passer les cordons profilés dans un sel fondu, dont la teneur en nitrate de lithium est comprise entre 20 et 45 % en poids, et notamment entre 27 et 37 % en poids.

13. Procédé suivant la revendication 8, caractérisé en ce qu'il consiste à faire passer les cordons profilés dans un sel fondu qui a une teneur supplémentaire en nitrate de calcium.

14. Procédé suivant la revendication 13, caractérisé en ce que la teneur en nitrate de calcium est comprise entre 0 et 48 % en poids.

15. Procédé suivant la revendication 8 ou 13, caractérisé en ce qu'il consiste à faire passer les cordons profilés dans un sel fondu constitué de 60 % en poids de nitrate de potassium, de 22 % en poids de nitrate de lithium et de 18 % en poids de nitrate de calcium.

16. Procédé suivant la revendication 15, caractérisé par les stades supplémentaires :

c) refroidissement du sel fondu à 100°C, pour obtenir un liquide limpide et visqueux ;

d) cristallisation de la masse fondue refroidie à une température constante de 107°C ;

e) chauffage à 112°C, pour refondre la masse cristalline fine en une masse fondue limpide et pour l'utiliser pour d'autres vulcanisations.

17. Procédé suivant la revendication 8, caractérisé par les stades initiaux supplémentaires suivants :

f) mélange des constituants individuels du sel sous forme sèche, pour obtenir un prémélange ;

g) fusion de ce prémélange en une phase homogène.

18. Procédé suivant la revendication 8, caractérisé par les stades initiaux supplémentaires suivants :

h) addition des constituants résiduels à un liquide déjà fondu, dans lequel ils se dissolvent.